# EUROPEAN PATENT SPECIFICATION

(11) **EP 2 547 706 B1**
(45) Date of publication and mention of the grant of the patent: **12.11.2014**
(21) Application number: 11708190.1
(22) Date of filing: 02.03.2011
(51) Int. Cl.: C08F 220/06, C08F 220/44, C08F 220/56, C08F 236/10, C08F 2/24

(54) **POLYMER LATEX USEFUL FOR THE PRODUCTION OF TEXTILE FLOOR COVERINGS**
POLYMERLATEX DAS ZUR HERSTELLUNG VON TEXTILBODENBELAEGEN VON NUTZEN IST
LATEX EN POLYMERE UTILE POUR LA PRODUCTION DE REVETEMENTS DE SOL DE TEXTILE

(30) Priority: 15.03.2010 EP 10002695
(43) Date of publication of application: 23.01.2013
(73) Proprietor: Synthomer Deutschland GmbH, 45772 Marl (DE)
(72) Inventor: KLEINWÄCHTER, Uwe, 45768 Marl (DE); LUDWIG, Peter, 46284 Dorsten (DE); WAGNER, Sandra, 47443 Moers (DE)
(74) Representative: f & e patent
(86) International application number: PCT/EP2011/001010
(87) International publication number: WO 2011/113532

(56) References cited:
- WO-A1-02/02864
- US-A- 5 093 449
- US-A1- 2007 238 825
- DATABASE WPI Week 198244 Thomson Scientific, London, GB; AN 1982-93787E XP002595299, & JP 57 155272 A (ASAHI DOW LTD) 25 September 1982 (1982-09-25)

## Description

The present invention relates to a polymer latex composition and to a compound containing the same useful in the preparation of textile floor coverings. According to further aspects, the present invention relates to a floor or ground covering comprising a coating or a structure element made from such compounds.

### Background of the invention

As exemplified by WO02/02864, adhesives for carpet backing generally contain carboxylated styrene butadiene latex copolymer dispersions. According to the teaching of WO02/02864 greater than 5 % up to about 18 wt.-% of the total monomer should be monomers containing at least one carboxylic acid group.

EP-A-407059 discloses latex compositions and paper coating compositions, carpet backing compositions or adhesive compositions comprising said latex. The copolymer latex is prepared by emulsion polymerization of (a) 2 to 80 wt.-% of a conjugated diene compound, (b) 0.1 to 10 wt.-% of an ethylenically unsaturated carboxylic acid and (c) 10 to 97.9 wt.-% of an ethylenically unsaturated compound other than compounds (a) and (b) whereby the presence of certain transfer agents is decisive according to the teaching of that prior art reference. Component c) according to EP-A-407059 may be selected from a long list including aromatic alkenyl compounds, unsaturated carboxylic acids, ester compounds, unsaturated carboxylic amide compounds and numerous ethylenically unsaturated monomers. In all examples in that reference, wherein styrene and additionally non-ionic hydrophilic monomers are present, the amount of unsaturated monomers comprising a carboxylic acid group is at least 1 wt.-% based on the total weight of the monomers. Examples showing a styrene content of at least 30 wt.-% even have a minimum amount of carboxylic acid-functional ethylenically unsaturated monomers of at least 3 wt.-%. Furthermore, it is described in EP-A-407059 that a minimum amount of ethylenically unsaturated carboxylic acids is essential to obtain the required bonding strength for latex for its application.

US 3,487,032 discloses a polymer latex useful for paper coating composition and backings for textiles. The latex is formed by aqueous emulsion polymerization of 3 to 80 weight parts per 100 parts of monomer of aryl vinyl monomers, 20 to 70 parts by weight per 100 parts of monomer of a conjugated diene, 0.5 to 10 parts by weight per 100 parts of monomer of an ethylenically unsaturated carboxylic acid and 0.5 to 5 parts by weight per 100 parts of monomer of an ethylenically unsaturated primary amide. The total amount of surface active agent is between 0.13 to 1.5 parts per 100 parts of monomer. In the examples the lowest amount of unsaturated carboxylic acid monomer is 0.97 wt.-% whereas for the examples having an amount of surfactant of less than 1 wt.-%, based on the total weight of monomer, the amount of carboxylic acid-functional monomers is above 1 wt.-% with increasing amounts of carboxylic acid monomers with decreasing amounts of surfactant.

The present inventors have now realized that for certain applications of polymer latices for the preparation of textile floor coverings latices with the amount of carboxylic acid-functional monomers as known from the prior art in combination with a low amount of surfactant in the polymer latex composition have certain disadvantages, especially insufficient mechanical strength of the bonding of face fibers into the support structure, insufficient water resistance, insufficient blister resistance in case bulk structures are formed from the latex composition.

GB 1,347,196 discloses a high solids latex for the preparation of latex foams. The monomer mixture for making the latex consists of 50 to 90 wt.-% of butadiene and 10 to 50 wt.-% of a mixture of 70 to 99.5 wt.-% of a vinylidene compound selected from styrene, alpha-methyl styrene, vinylidene chloride, acrylonitrile, methacrylonitrile, methyl methacrylate and mixtures thereof, and 0.5 to 30 wt.-% of a second copolymerized compound selected from olefinically unsaturated carboxylic acids and olefinically unsaturated carboxylic acid amines. The most preferred monomer composition for the foam products is a carboxyl-free mixture of 50 to 90 wt.-% butadiene and 10 to 50 wt.-% of styrene. The amount of emulsifier is between 1 and 6 parts by weight per 100 parts of monomer, whereby 2 to 4 parts per 100 parts of monomer is preferred.

EP 739 961 discloses latex compositions to be used for aqueous coating composition. The latex polymer is composed of monomers or mixtures of monomers having neither ionic groups nor alcohol-functional groups, monomers having alcohol-functional groups and monomers having acid-functional groups or their salts. The amount of alcohol-functional monomers is between 3 and 15 %, preferably between 4 and 10 %. The high amount of hydroxyl-functional groups is essential according to the teaching of EP 739 961 in order to provide crosslinking sites to be crosslinked, for example with an isocyanate crosslinker. In addition, the amount of carboxylic acid-functional monomers, as can be seen from the example, is in the order of 5 wt.-%, based on the total amount of monomers, which is also important according to the use of the latex according to EP-A 739 961 in water-based coating compositions.

EP-A 1 024 154 discloses polymer latex compositions that exhibit tolerance to multivalent electrolytes. These latices may be used in the process and recovering of natural resources in the mining petroleum and geothermal industries as well as in paper and textile coatings and construction mixtures employing substantial amounts of inorganic pigments of fillers. The latex comprises 2-acryloamido-2-methylpropanesulfonic acid or the sodium salt thereof (AMPS). According to the claims, the amount of AMPS is at least 3 wt.-%, based on the total monomer of the latex polymer. The examples contain one example with 1.5 wt.-% of AMPS that shows insufficient stability against multivalent cations.

The object of the present invention is to provide a polymer latex composition that shows, when used in textile floor covering applications, improved water-resistance and/or improved blister resistance and/or improved bonding strength of the face fibers.

### Summary of the invention

This object has been obtained by a polymer latex composition comprising:
(I) a latex polymer containing structural units derived from
   a) 30 - 69 wt.-% of at least one conjugated diene monomer;
   b) 30 - 69 wt.-% of at least one aromatic vinyl monomer;
   c) 1 - 2.5 wt.-% of at least one monomer selected from
      i) ethylenically unsaturated monomers having a primary amide group,
      ii) ethylenically unsaturated monomers having a N-C₁-C₂-alkyl substituted amide group,
      iii) ethylenically unsaturated monomers having a hydroxyalkyl group, and
      iv) ethylenically unsaturated acids having a pkₐ of 1,7 at most with the proviso that if an ethylenically unsaturated acid having a pkₐ of 1,7 at most is present the amount is less than 1.5 wt.-% ; and
   d) 0 - 0.8 wt.-% of an ethylenically unsaturated acid having a pkₐ of more than 1.8,
(II) water; and
(III) a surfactant in an amount of less than 1 wt.-%, wherein all weight percentages are based on the total weight of monomers in the latex polymer.

According to a further aspect, the present invention relates to a compound suitable for the preparation of backings for textile floor coverings comprising:
a) the polymer latex composition according to any of claims 1-8;
b) at least one filler; and
c) optionally rubber particles.

Particularly, the present invention relates to the use of the above polymer latex composition or the above-defined compounds in the preparation of textile floor covering. Thus, the present invention also relates to a textile floor covering comprising a coating or a structural element made from one of the above compounds.

### Detailed description of the present invention.

The present inventors have discovered that the commonly used latex composition based on carboxylated styrene butadiene latices have some disadvantages in certain textile floor covering applications.

Textile floor coverings, for example carpets or artificial grass, are made by tufting face fibers into a non-woven or woven fabric used as a support structure. Typically, the face fibers are attached to that support structure by using a coating of a polymer latex compound on the back side of the support structure in order to form, for example, a carpet backing. To this general structure an additional support structure and/or an additional coating may be applied to the back side of the textile floor covering.

Thus, the material for the fibers and for the support structure may have the same or a similar hydrophilicity or may have different hydrophilicity.

A typical fiber material for the face fibers may be selected from wool, cotton, acrylic, polypropylene, polyethylene, polyester, nylon 6 or nylon 66. The material for the first support structure may be selected from cotton, wool, polyethylene, polyester, polyamide, polypropylene, jute or combinations thereof.

The material for the fabrics of the second support structure may be selected from polypropylene fiber, mixtures of polypropylene fiber, cotton and/or jute fiber.

For an artificial grass, according to one embodiment of the present invention, the material for the fabric of the first support structure is selected from polyamides, for example polyamide-6 and polyamide-66 and polyester whereas the face fiber may be selected from polypropylene and polyethylene.

Polyamide fibers or polyester fibers have a considerably higher hydrophilicity compared to polypropylene or polyethylene fibers. The present inventors have now discovered that coatings based on commonly used carboxylated styrene butadiene latices showed an inappropriate bonding strength for the face fibers, particularly when used as artificial grass and thus for sports grounds that have to be resistant to mechanical strain.

Thorough investigation of this issue revealed the surprising result that loss of bonding strength for the face fibers in the support structure can be associated to the fact that compounds used for the coating materials on basis of carboxylated styrene butadiene latices have a low surface tension due to the presence of free surfactant in the aqueous phase of the polymer latex composition. Surface tension of the compounds is low enough to wet for example hydrophilic fibers like polyamide fibers, but not low enough to also wet hydrophobic fibers like polypropylene.

The present inventors have now discovered that if the surface tension of the compound is above 50 Nm/m, measured according to ISO 1409 at 23°C, neither the hydrophobic fibers are wetted nor the more hydrophilic fibers like polyamide. But nevertheless the resultant coating for the backing of the artificial grass leads to an increased bonding between face fibers and support structure. This was a surprising result since a person skilled in the art would expect that good wetability of the fiber material should improve the bonding strength.

On the other hand it was observed that due to the surface tension of the compound despite the low wetability for both materials the coating was very uniform and without wanting to be bound by theory it is assumed that this better homogeneity of the coating on the two different materials is important for the improved bonding strength.

The inventors have now investigated how polymer latex compositions can be obtained that have a high surface tension and lead to compounds with a high surface tension. Furthermore, of course other properties of the polymer latex composition, for example and most importantly stability, should not be compromised by changing the polymer latex composition. Furthermore, the surface tension of the polymer latex composition should show little dependency on the pH.

Without wanted to be bound by theory, it is believed that the disadvantages experienced with using standard carboxylated styrene butadiene latices are associated with the acidity of the carboxylic acid groups of the standardly used ethylenically unsaturated carboxylic acids like acrylic acid or methacrylic acid. It is believed that at a low pH the carboxylic acid groups are not completely dissociated and a sufficient amount of surfactant is necessary on the surface of the latex particles. With increasing pH the carboxylic acid groups dissociate more completely with the result that less surfactants are present on the surface of the latex particles and go into the aqueous phase thereby reducing the surface tension of the composition.

Thus, one measure according to the present invention is to limit the total amount of ethylenically unsaturated acids having a pkₐ of more than 1.8 to be 0.8 wt.-% at most, preferably less than 0.5, more preferred less than 0.3, even more preferred less than 0.1 wt.-%, based on the total weight of monomers in the latex polymer. The latex polymer of the present invention may be even free of structural units derived from ethylenically unsaturated derived from ethylenically unsaturated acids having a pkₐ of more than 1.8.

A second measure in order to assure the surface tension, as discussed above, is to limit the amount of total surfactant to be less than 1 wt.-%, based on the total weight of monomers in the latex polymer. Preferably, the total amount of surfactant is 0.8 wt.-% at most, more preferred 0.6 wt.-% at most, and most preferred 0.5 wt.-% at most, based on the total weight of monomers in the latex polymer. Minimum amounts of surfactant are preferably at least 0.01 wt.-%, more preferred at least 0.03 wt.-%, even more preferred 0.05 wt.-% and most preferred at least 0.1 wt.-%. When ethylenically unsaturated acids with a pkₐ of 1.7 at most are used as comonomers, the surfactant may even be omitted although that is not preferred.

Taking into account the low amounts of ethylenically unsaturated acids in the monomer mix and the low amount of surfactant, additional hydrophilic monomers should be present in order to sufficiently stabilize the latex.

According to the present invention, four different groups of hydrophilic monomers can be used that all have in common that they are hydrophilic and non-ionic or are ethylenically unsaturated acids with a low pkₐ of 1.7 at most. These ethylenically unsaturated acids are dissociated to form ionic groups even at a low pH with the result that the dissociation has a low dependency on pH and no or little amounts of surfactants are necessary to stabilize the latex particles.

The total amount of these non-ionic hydrophilic monomers in the monomer mix for the polymer should be 1.0 to 2.5 wt.-%, preferably 1.2 to 2.3 wt.-%, more preferred 1.5 to 2.0 wt.-%, based on the total amount of monomers. When ethylenically unsaturated acids having a pkₐ of 1.7 at most are used, the amount should be from 1 to less than 1.5 wt.-% , but the total amount of the hydrophilic monomers according to group c) should be in the range of between 1 and 2.5 wt.-% or the above preferred ranges, based on the total weight of monomers.

The latex polymer according to the present invention contains structural units derived from 30 to 69 wt.-% of at least one conjugated diene monomer, based on the total weight of monomers of latex polymer. The conjugated diene monomer is preferably selected from 1,3-butadiene, 2-chloro-1,3-butadiene, isoprene, conjugated straight-chain and branched pentadienes and hexadienes and combinations thereof. The most preferred conjugated diene monomer is 1,3-butadiene.

The amount of structural units derived from conjugated diene monomers is preferably 35 to 65 wt.-%, more preferred 40 to 60 wt.-% and most preferred 45 to 55 wt.-%, based on the total weight of monomers in the latex polymer.

The latex polymer according to the present invention further contains 30 to 69 wt.-% of structural units derived from at least one aromatic vinyl monomer, based on the total weight of monomers in the latex polymer. The polymer contains preferably 35 to 65 wt.-%, more preferred 40 to 60 wt.-% and most preferred 45 to 55 wt.-% of structural units derived from aromatic vinyl monomers, based on the total weight of monomers in the latex polymer. Preferably, the aromatic vinyl monomer is selected from styrene, alpha-methyl styrene, 4-methyl styrene, alpha-chloro styrene, 4-chloro styrene, divinylbenzene, 4-methoxy-3-methylstyrene, 3,4-dimethyl-alpha-methylstyrene and combinations thereof.

The ethylenically unsaturated monomer having a primary amide group (monomer c1) is preferably selected from (meth)acrylamide, ethacrylamide, crotoneamide, diacetoneamide and combinations thereof. Preferably, the ethylenically unsaturated monomer having a primary amide group is acrylamide.

The ethylenically unsaturated monomer having an N-C₁-C₂-alkyl-substituted amide group is preferably selected from N-methyl (meth)acrylamide and N-ethyl (meth)acrylamide.

It is to be pointed out that the term "C₁-C₂-alkyl" does not refer to a substitute C₁-C₂-alkyl groups like methylol groups. Monomers containing N-methylol amide groups or N-alkoxymethyl amide groups do not belong to the group of monomers according the (c ii).

The ethylenically unsaturated monomer having a hydroxyalkyl group (c iii) are preferably selected from 2-hydroxyethyl acrylate and 2-hydroxyethyl methacrylate.

The ethylenically unsaturated acid having a pkₐ of 1.7 at most (c iv) is preferably selected from styrene sulfonic acid, vinyl sulfonic acid, allyl sulfonic acid, methallyl sulfonic acid, (meth)acrylic acid-3-sulfopropylester, 2-acrylamido-2-methylpropane sulfonic acid. Preferably, the ethylenically unsaturated acid having a pkₐ of 1.7 at most is 2-acrylamido-2-methylpropane sulfonic acid (AMPS).

The ethylenically unsaturated acid having a pkₐ of more than 1.8 (monomer group d) is preferably selected from (meth)acrylic acid, crotonic acid, and ethylenically unsaturated dicarboxylic acids selected from fumaric acid, maleic acid, itaconic acid, messaconic acid, citraconic acid and mono esters and amides thereof.

The surfactants that might be applied according to the present invention are well known and are commonly used in emulsion polymerization (D.C. Blackley, Emulsion Polymerization, Chapter 7, Applied Science Publishers Ltd. London, 1975). Surfactants that may be used according to the present invention are in particular so called anionic surfactants exemplified by fatty alcohol sulfates, higher alkyl sulfonates, alkyl aryl sulfonates, aryl sulfonates together with the condensation products thereof with formaldehyde, salts of sulpho-succinic acid esters and sulfate ethylene oxide educts. Preferably, the polymer latex composition of the present invention is free of sulfides of an ethoxylated phenol.

Non-ionic surfactants that may be used according to the present invention are for example reaction products of ethylene oxide with fatty alcohols such as lauryl, myristyl, cetyl, stearyl and oleyl alcohols with fatty acids such a lauric, mauristic, palmitic, stearic and oleic acids and amides thereof, and with alkyl phenyl such as isooctyl, isononyl and dodecyl phenyl. Anionic and non-ionic surfactants may also be used in combination, but it is important that the total amount of surfactant is within the above-discussed limits.

The latex polymer according to the present invention preferably has a volume average (mean) particle size of 80 to 220 nm, more preferred 100 to 200 nm, measured by hydrodynamic fractionation using the particle size analyzer PL-PSDA available from Polymer Laboratories Varian Deutschland GmbH according to the operators manual of June 2002.

The polymer latex composition according to the present invention is prepared by emulsion polymerization in an aqueous medium. Generally, the monomers are dispersed in water with the surfactant. The reaction is initiated by a free radical initiator. The emulsion polymerization may be a batch process in which the entire dispersion of monomers in water is put in the reactor. It may be an incremental process in which a portion of the monomer mixture surfactant and water is added to the reactor and the polymerization is initiated or it may be a continuous reaction using a chain of two or more reactors. The remaining monomers and surfactants, if any, may be added to the reactor over a period of time. The process may be a seeded process in which small amounts of a seed polymer are added to the reactor prior to initiation to control the particle size.

The seed suitable according to the invention consists of, for example, latices based on the latices to be produced according to the present invention. Thus, it is preferred to use a standard styrene butadiene seed or polystyrene seed when making the polymer latex composition according to the present invention. The particle size of the initially introduced seed is preferably in the range from 20 to 50 nm, even more preferred in the range from 25 to 35 nm. The quantity of the seed to be used depends on the size of the latex to be produced and is usually 0.01 to 5 wt.-%, preferably 0.1 to 2 wt.-%, based on the total amount of monomers used in the polymerization process. In other embodiments of the present invention the seed may be formed in situ at the beginning of the polymerization reaction.

Free radical initiators which may be used in the process according to the present invention are, for example, inorganic peroxy compounds such has hydrogen peroxide, sodium, potassium and ammonium peroxydisulfate, peroxycarbonates and peroxyborates, as well as organic peroxy compounds, such as alkyl hydroperoxides, dialkyl peroxides, acyl hydroperoxides, and diacyl peroxides, as well as esters, such as tertiary butyl perbenzoate and combinations of inorganic and organic initiators. The quantities of initiators are usually within the range of 0.01 to 5 wt.-%, based on the total amount of monomers used, preferably in the range of 0.05 to 2.0 wt.-%. The above-mentioned inorganic and organic peroxy compounds may also be used in a known manner in combination with one or more suitable reducing agents. Examples of such reducing agents which may be mentioned are sulfur dioxide, alkali metal disulfites, alkali metal and ammonium hydrogen sulfites, thiosulfates, and dithionites, as well as hydroxylamine hydrochloride, hydrazine sulfate, iron (II) sulfate, glucose and ascorbic acid. The quantity of the reducing agent is 0.01 to 1.0 wt.-%, based on the total weight of monomers.

The most suitable initiator or initiator system may be determined by means of preliminary tests. Suitability is in particular dependent upon the nature of the used monomers and the polymerization reaction temperature.

It is frequently advisable to perform the emulsion polymerization additionally in the presence of buffer substances and chelating agents. Suitable substances are, for example, alkali metal phosphates and pyrophosphates (buffer substances) and the alkali metal salts of hydroxylethylene ethylenediaminetriacetic acid (HEDTA) as chelating agents. The quantity of buffer substances and chelating agents is usually 0.01 to 1 wt.-%, based on the total quantity of monomers.

Furthermore, it may be advantageous to use chain transfer agents (molecular weight regulators) in emulsion polymerization. Typical agents are, for example, organic sulfur compounds, such as C₁-C₁₂ alkyl mercaptans, n-dodecylmercaptan and t-dodecylmercaptan being preferred. The quantity of the chain transfer agents, if present, is usually 0.05 to 3.0 wt.-%, preferably 0.2 to 2 wt.-%, based on the total weight of the used monomers.

The polymer latex composition according to the present invention is then compounded to form a compound suitable for the intended use in the preparation of textile floor coverings. The compound according to the present invention contains, in addition to the polymer latex composition according to the present invention, one or more fillers. Furthermore, the compound has a surface tension of at least 50 mN/m measured according to ISO 1409 at 23°C; preferably the surface tension is between 50 mN/m to 70 mN/m, more preferred between 55 mN/m to 65 mN/m.

Suitable fillers to be used in the compounds according to the present invention may be organic or inorganic and may be selected from the group consisting of clay, calcium carbonate, barium sulfate, hydrated aluminas, silicates, polyethylenes, carbon black, and mixtures thereof. Preferred according to the present invention are the above-described inorganic fillers whereby calcium carbonate is most preferred. The term "filler" used according to the present invention does not encompass rubber particles like rubber crumbs. According to a first embodiment of the present invention that does not contain rubber particles, the amount of filler is preferably in the range of 50 to 500 wt.-%, preferably 100 to 350 wt.-%, more preferred 150 to 300 wt.-%, based on the total solids weight of the polymer latex composition.

According to a further embodiment of the present invention, the compound may additionally comprise rubber particles like rubber crumbs. These embodiments for a compound according to the present invention is particularly suitable for the preparation of slip-resistant textile floor coverings. In this embodiment the filler may be selected from the same fillers as above, but in lower amounts. Thus, preferably the amount of filler is 30 to 150 wt.-%, more preferred 40 to 100 wt.-%, based on the total solids weight of the polymer latex composition. The amount of rubber particles is preferably in the range of 80 to 200 wt.-%, more preferred 100 to 150 wt.-%, based on the total solids weight of the polymer latex composition.

For rubber crumb applications the rubber crumb-containing compound is applied onto a precoated textile floor-covering structure, for example carpet, and is dried at elevated temperature to form a slip-resistant coating on the back side of the textile floor covering. In order to have the desired slip resistance it is not desired that a smooth closed rubber skin is formed. On the contrary, it is desired that the surface is rough and porous in order to provide the desired slip resistance.

The inventors have surprisingly discovered that when using a compound according to the present invention having a high surface tension, compared to compounds comprising standard carboxylated styrene butadiene latices, have a reduced stability and thus when drying the coating, a rough slip-resistant surface is obtained whereas with a compound comprising a standard carboxylated styrene butadiene latex a smooth closed skin-like surface is obtained which is less desired.

According to a further embodiment of the present invention, the compound may be used to form bulk structures on the back side of textile floor coverings, for example naps, to improve the drain properties of the textile floor covering. An important property of such bulk structures on backings for textile floor coverings is the blister resistance, i.e. that at the elevated drying temperature no blisters are formed that burst and destroy the structure.

The inventors have now discovered that by using the compound according to the present invention having the high surface tension a considerably better blister resistance is achieved at high drying temperature compared to compounds comprising standard carboxylated styrene butadiene latices.

The compounds according to the present invention may optionally include additives such as foaming agents, pH controllers, flame retardants, wetting agents, dispersing agents, anti-microbial agents, lubricants, dyes, anti-oxidants, antistatic agents, stain-resisting compounds and/or rheology modifiers. The textile floor coverings according to the present invention may be produced by processes known to those skilled in the art including, but not limited to direct coating and roll metering and knife-coating and lick roll application, as described in D.C. Blackley Latex and Textiles, section 19.4.2, page 361.

The present invention will now be explained in more detail with reference to the following examples:

### Example 1 and comparative examples 1

A polymer latex composition in accordance with the present invention and a comparative composition is prepared using the components in the amounts as given in Table 1 as follows.

The polymer latex compositions were produced by a free radical polymerization combining an initial charge and a feed. A seed was used in the initial charge together with a complexing agent and water (about 30 parts by weight, based on total monomers). After heating the initial charge to 85°C the polymerization reaction was initiated by starting a feed of ammonium persulfate. The temperature was maintained constant and at 85°C. 10 minutes after persulfate feed starts the monomers, the surfactant, the modifier and water were added to the reactor over a period of six hours with a constant feed rate. Thereafter, a post activation with ammonium persulfate to reduce the residual monomers was started and continued for three hours. The product was cooled to ambient temperature and the pH was adjusted to 7.5 using an aqueous sodium hydroxide. The total solids content of the final latex was 51.7 wt.-%.

The surface tension as measured according to ISO 1409 at 23°C of the polymer latex composition and the average particle size of the latex polymer measured by hydrodynamic fractionation using a particle size analyzer available from Polymer Laboratories, Varian Deutschland GmbH are given in Table 1.

**TABLE 1**

| Components (amounts given in wt.-% based on total monomer) | Example 1 | Comparative Example 1 |
|---|---|---|
| acrylic acid | - | 1.5 |
| acryl amide | 1.5 | - |
| ammonium peroxodisulfate | 1 | 1 |
| butadiene | 48 | 48 |
| C₁₃-C₁₅-alkyl aryl sulfonate | 0.5 | 0.5 |
| styrene seed latex | 0.8 | 0.8 |
| styrene | 49.7 | 49.7 |
| t-dodecyl mercaptane | 0.7 | 0.7 |
| HEDTA | 0.02 | 0.02 |
| surface tension [mN/m] | 59 | 47.9 |
| average particle size [nm] | 185 | 182 |

### Example 2 and comparative example 2

The polymer latex compositions according to example 1 and comparative example 2 are compounded by mixing the ingredients according to Table 2 and 50 parts by weight water The amounts in Table 2 are given in parts by weight on a solid bases.

**TABLE 2**

| Component | Example 2 | Comparative Example 2 |
|---|---|---|
| Latex | Latex E. 1: 155.1 | Latex CE. 1: 155.1 |
| carbon black | 1.4 | 1.4 |
| calcium carbonate | 388 | 388 |
| polyacrylate thickener | 0.5 | 0.5 |

The obtained compounds are used for the production of artificial grass whereby a non-woven web of a polyamide 6 support structure was tufted with polypropylene face fibers and the compounds according to example 2 and comparative example 2 were applied to the back side in an application weight of 1000g/m² wet and dried at a temperature of 80°C. Thereafter, the face fibers were cut and the pile anchorage of the face fibers was measured using an instron tensile tester. The surface tension of the compounds was measured according to ISO 1409 at 23°C. The test results are shown in Table 3.

**TABLE 3**

| | surface tension [mN/m] | pile anchorage |
|---|---|---|
| Example 2 | 55.2 | 55 |
| Comparative Example 2 | 48.2 | 45 |

As can be seen from the test results the latex composition according to the present invention and the compound prepared there from show a considerably improved pile anchorage when used as backing material for artificial grass.

### Example 3 and comparative example 3

Test specimens of the compounds according to example 2 and comparative example 2 were formed into two bulk test specimens of approximately spherical shape and a weight of 3 g. These test specimens were dried at 150°C for 10 minutes.

The test specimens formed from the compound according to example 2 remained intact whereas the test specimens formed from the compound according to comparative example 2 was destroyed due to bursting of blisters.

Example 3 and comparative example 3 show that the latex composition according to the present invention and the compound formed there from exhibit a considerably improved blister resistance when dried at elevated temperatures.

### Example 4 and comparative example 4

A compound was prepared using the polymer latex according to example 1 and comparative example 1 by mixing the ingredients as given in Table 4 with 50 part by weight of water. The amounts in Table 4 are given in parts by weight on a solids basis. The thus obtained compounds according to example 4 and comparative example 4 were applied onto a precoated carpet structure to provide a slip-resistant backing. The coated carpet is dried at 100°C.

**TABLE 4**

| Component | Example 4 | Comparative Example 4 |
|---|---|---|
| Latex | Latex E 1 155.1 | Latex CE 1 155.1 |
| rubber crumbs | 180 | 180 |
| carbon black | 0.6 | 0.6 |
| calcium carbonate | 90 | 90 |
| wetting agent (Newalol PFN) | 0.8 | 0.8 |
| polyacrylate thickener | 1 | 1 |

The compound according to comparative example 4 forms a smooth, homogeneous skin-like surface whereas the compound according to example 4 forms a rough slip-resistant surface.

Example 4 and comparative example 4 show that the latex composition according to the present invention and the compounds made therefrom leads to improved slip resistance of rubber crumb coatings.

## Claims

1. A polymer latex composition comprising:
(I) a latex polymer containing structural units derived from
a) 30 - 69 wt.-% of at least one conjugated diene monomer;
b) 30 - 69 wt.-% of at least one aromatic vinyl monomer;
c) 1 - 2.5 wt.-% of at least one monomer selected from
i) ethylenically unsaturated monomers having a primary amide group,
ii) ethylenically unsaturated monomers having a N-C₁-C₂-alkyl substituted amide group,
iii) ethylenically unsaturated monomers having a hydroxyalkyl group, and
iv) ethylenically unsaturated acids having a pkₐ of 1.7 at most with the proviso that if an ethylenically unsaturated acid having a pkₐ of 1.7 at most is present the amount is less than 1.5 wt.-% ; and
d) 0 - 0.8 wt.-% of an ethylenically unsaturated acid having a pkₐ of more than 1.8,
(II) water; and
(III) a surfactant in an amount of less than 1 wt.-%, wherein
all weight percentages are based on the total weight of monomers in the latex polymer.

2. The polymer latex composition according to claim 1, wherein the conjugated diene monomer is selected from 1,3-butadiene, 2-chloro-1,3-butadiene, isoprene, conjugated straight-chain and branched pentadienes and hexadienes; and combinations thereof, preferably the conjugated diene monomer is 1,3-butadiene.

3. The polymer latex composition according to any of the preceding claims, wherein the aromatic vinyl monomer is selected from styrene, alpha-methyl styrene, 4-methyl styrene, alpha-chloro styrene, 4-chloro styrene, divinylbenzene, 4-methoxy-3-methylstyrene, 3,4-dimethyl-alpha-methylstyrene and combinations thereof.

4. The polymer latex composition according to any of the preceding claims, wherein:
- the ethylenically unsaturated monomer having a primary amide group is selected from (meth)acrylamide, ethacrylamide, crotoneamide, diacetoneamide and combinations thereof, preferably the ethylenically unsaturated monomer having a primary amide group is acrylamide;
- the ethylenically unsaturated monomer having a N-C₁-C₂-alkyl substituted amide group is selected from N-methyl (meth)acrylamide and N-ethyl (meth)acrylamide;
- the ethylenically unsaturated monomer having a hydroxyalkyl group is selected from 2-hydroxyethyl acrylate and 2-hydroxyethyl methacrylate;
- the ethylenically unsaturated acid having a pkₐ of 1.7 at most is selected from styrene sulfonic acid, vinyl sulfonic acid, allyl sulfonic acid, methallyl sulfonic acid, (meth)acrylic acid-3-sulfopropylester, 2-acrylamido-2-methylpropane sulfonic acid, preferably the ethylenically unsaturated acid having a pkₐ of 1.7 at most is 2-acrylamido-2-methylpropane sulfonic acid; or
- the ethylenically unsaturated acid having a pkₐ of more than 1.8 is selected from (meth)acrylic acid, crotonic acid, and ethylenically unsaturated dicarboxylic acids selected from fumaric acid, maleic acid, itaconic acid, messaconic acid, citraconic acid and mono esters and amides thereof.

5. The polymer latex composition according to any of the preceding claims, wherein the latex polymer contains structural units derived from monomers c) (i) - c) (iii) in an amount of 1.2 to 2.3, or 1.5 to 2.0 wt.-%, based on the total weight of monomers in the latex polymer.

6. The polymer latex composition according to any of the preceding claims, wherein the amount of structural units derived from ethylenically unsaturated acids having a pkₐ of more than 1.8 is less than 0.5, or less than 0.3 or less than 0.1 wt.-%, based on the total weight of monomers in the latex polymer, preferably the latex polymer contains no structural units derived from ethylenically unsaturated acids having a pkₐ of more than 1.8.

7. The polymer latex composition according to any of the preceding claims, wherein the amount of surfactant is 0.8 wt.-% at most, or 0.6 wt.-% at most, or 0.5 wt.-% at most, based on the total weight of monomers in the latex polymer.

8. The polymer latex composition according to any of the preceding claims, wherein the average particle size of the latex polymer is 80 to 220 nm or 100 to 200 nm measured by hydrodynamic fractionation.

9. A compound suitable for the preparation of backings for textile floor coverings comprising:
a) the polymer latex composition according to any of claims 1-8;
b) at least one filler; and
c) optionally rubber particles.

10. The compound according to claim 9, wherein
(a) one or more fillers are present in an amount of 50 to 500 wt.-% , or 100 to 350 wt.- % or 150 to 300 wt.-%, based on the total solids weight of the polymer latex composition and no rubber particles are present; or
(b) one or more fillers are present in amounts of 30 to 150 wt.-% or 40 to 100 wt.-%; and rubber particles are present in amounts of 80 to 200 wt.-% or 100 to 150 wt.-%,
all weight percentages being based on the total solids weight of the polymer latex composition.

11. The compound according to claim 10 (a), whereby the compound has a surface tension of at least 50 mN/m measured according to ISO 1409 at 23°C.

12. Use of the polymer latex composition according to any of claims 1 to 8 or of the compound according to any of claims 9 to 11 in the preparation of textile floor coverings.

13. A textile floor covering comprising a coating or a structural element made from a compound according to any of claims 9 to 11.

14. The covering according to claim 13, being selected from carpets and artificial grass.

15. The covering according to any of claims 13 or 14 comprising:
- a first support structure comprising non-woven or woven fabric of a first material;
- face fibers of a second material;
- a first coating deposited from a compound according to any of claims 9 to 11 attaching the face fibers to the first support structure;
- optionally a second support structure, whereby if the second support structure is present the coating is positioned between the first and the second support structure; and
- optionally a second coating on the side of the second support structure opposite to the first coating wherein
the first and the second material have the same or different hydrophilicity and the second coating is deposited from a compound according to any of claims 9 to 11 or from a different compound.

## Patentansprüche

1. Polymerlatexzusammensetzung, enthaltend:
(I) ein Latexpolymer, das strukturelle Einheiten enthält, die sich von
a) 30 - 69 Gew.-% wenigstens eines konjugierten Dienmonomers,
b) 30 - 69 Gew.-% wenigstens eines aromatischen Vinylmonomers,
c) 1 - 2,5 Gew.-% wenigstens eines Monomers, ausgewählt aus
i) ethylenisch ungesättigten Monomeren mit einer primären Amidgruppe,
ii) ethylenisch ungesättigten Monomeren mit einer N-C₁-C₂-alkylsubstituierten Amidgruppe,
iii) ethylenisch ungesättigten Monomeren mit einer Hydroxyalkylgruppe und
iv) ethylenisch ungesättigten Säuren mit einem pkₐ von höchstens 1,7, unter der Voraussetzung, dass, wenn eine ethylenisch ungesättigte Säure mit einem pkₐ von höchstens 1,7 vorhanden ist, die Menge weniger als 1,5 Gew.-% beträgt, und
d) 0 - 0,8 Gew.-% einer ethylenisch ungesättigten Säure mit einem pka von mehr als 1,8,
ableiten,
(II) Wasser und
(III) ein oberflächenaktives Mittel in einer Menge von weniger als 1 Gew.-%, wobei alle Gewichtsprozentangaben sich auf das Gesamtgewicht der Monomere in dem Latexpolymer beziehen.

2. Polymerlatexzusammensetzung gemäß Anspruch 1, worin das konjugierte Dienmonomer ausgewählt ist aus 1,3-Butadien, 2-Chlor-1,3-butadien, Isopren, konjugierten geradkettigen und verzweigten Pentadienen und Hexadienen und Kombinationen davon, vorzugsweise das konjugierte Dienmonomer 1,3-Butadien ist.

3. Polymerlatexzusammensetzung gemäß einem der vorstehenden Ansprüche, wobei das aromatische Vinylmonomer ausgewählt ist aus Styrol, alpha-Methylstyrol, 4-Methylstyrol, alpha-Chlorstyrol, 4-Chlorstyrol, Divinylbenzol, 4-Methoxy-3-methylstyrol, 3,4-Dimethyl-alpha-methylstyrol und Kombinationen davon.

4. Polymerlatexzusammensetzung gemäß einem der vorstehenden Ansprüche, worin:
- das ethylenisch ungesättigte Monomer mit einer primären Amidgruppe ausgewählt ist aus (Meth)acrylamid, Ethacrylamid, Crotonamid, Diacetonamid und Kombinationen davon, vorzugsweise das ethylenisch ungesättigte Monomer mit einer primären Amidgruppe Acrylamid ist,
- das ethylenisch ungesättigte Monomer mit einer N-C₁-C₂-alkylsubstituierten Amidgruppe ausgewählt ist aus N-Methyl(meth)acrylamid und N-Ethyl(meth)acrylamid,
- das ethylenisch ungesättigte Monomer mit einer Hydroxyalkylgruppe ausgewählt ist aus 2-Hydroxyethylacrylat und 2-Hydroxyethylmethacrylat,
- die ethylenisch ungesättigte Säure mit einem pkₐ von höchstens 1,7 ausgewählt ist aus Styrolsulfonsäure, Vinylsulfonsäure, Allylsulfonsäure, Methallylsulfonsäure, (Meth)acrylsäure-3-sulfopropylester, 2-Acrylamido-2-methylpropansulfonsäure, vorzugsweise die ethylenisch ungesättigte Säure mit einem pkₐ von höchstens 1,7 2-Acrylamido-2-methylpropansulfonsäure ist oder
- die ethylenisch ungesättigte Säure mit einem pkₐ von mehr als 1,8 ausgewählt ist aus (Meth)acrylsäure, Crotonsäure und ethylenisch ungesättigten Dicarbonsäuren, ausgewählt aus Fumarsäure, Maleinsäure, Itaconsäure, Messaconsäure, Citraconsäure und Monoestern und Amiden davon.

5. Polymerlatexzusammensetzung gemäß einem der vorstehenden Ansprüche, worin das Latexpolymer Struktureinheiten, die sich von den Monomeren c) (i) - c) (iii) ableiten, in einer Menge von 1,2 bis 2,3 oder 1,5 bis 2,0 Gew.-% enthält, bezogen auf das Gesamtgewicht der Monomere in dem Latexpolymer.

6. Polymerlatexzusammensetzung gemäß einem der vorstehenden Ansprüche, wobei die Menge an Struktureinheiten, die sich von ethylenisch ungesättigten Säuren mit einem pkₐ von mehr als 1,8 ableiten, weniger als 0,5 oder weniger als 0,3 oder weniger als 0,1 Gew.-% beträgt, bezogen auf das Gesamtgewicht von Monomeren in dem Latexpolymer, vorzugsweise das Latexpolymer keine Struktureinheiten enthält, die sich von ethylenisch ungesättigten Säuren mit einem pkₐ von mehr als 1,8 ableiten.

7. Polymerlatexzusammensetzung gemäß einem der vorstehenden Ansprüche, wobei die Menge an oberflächenaktivem Mittel höchstens 0,8 Gew.-% oder höchstens 0,6 Gew.-% oder höchstens 0,5 Gew.-%, bezogen auf das Gesamtgewicht von Monomeren in dem Latexpolymer, beträgt.

8. Polymerlatexzusammensetzung gemäß einem der vorstehenden Ansprüche, wobei die mittlere Teilchengröße des Latexpolymers 80 bis 220 nm oder 100 bis 200 nm gemessen durch hydrodynamische Fraktionierung, beträgt.

9. Compound, geeignet zur Herstellung von Rückseiten von textilen Bodenbelägen, enthaltend:
a) die Polymerlatexzusammensetzung gemäß einem der Ansprüche 1-8,
b) wenigstens einen Füllstoff und
c) wahlweise Kautschukteilchen.

10. Compound gemäß Anspruch 9, worin
(a) ein oder mehrere Füllstoffe in einer Menge von 50 bis 500 Gew.-% oder 100 bis 350 Gew.-% oder 150 bis 300 Gew.-%, bezogen auf das Gesamtfeststoffgewicht der Polymerlatexzusammensetzung, vorhanden sind und keine Kautschukteilchen vorhanden sind, oder
(b) ein oder mehrere Füllstoffe in Mengen von 30 bis 150 Gew.-% oder 40 bis 100 Gew.-% vorhanden sind und Kautschukteilchen in Mengen von 80 bis 200 Gew.-% oder 100 bis 150 Gew.-% vorhanden sind,
wobei sich alle Gewichtsprozentangaben auf das Gesamtfeststoffgewicht der Polymerlatexzusammensetzung beziehen.

11. Compound gemäß Anspruch 10 (a), wobei der Compound eine Oberflächenspannung von wenigstens 50 mN/m, gemessen gemäß ISO 1409 bei 23°C, aufweist.

12. Verwendung der Polymerlatexzusammensetzung gemäß einem der Ansprüche 1 bis 8 oder des Compounds gemäß einem der Ansprüche 9 bis 11 zur Herstellung von textilen Bodenbelägen.

13. Textiler Bodenbelag enthaltend eine Beschichtung oder ein Strukturelement, das aus einem Compound gemäß einem der Ansprüche 9 bis 11 hergestellt ist.

14. Belag gemäß Anspruch 13, ausgewählt aus Teppichen und Kunstrasen.

15. Belag gemäß einem der Ansprüche 13 oder 14, enthaltend:
- eine erste Trägerstruktur, enthaltend einen Fließstoff oder ein Gewebe eines ersten Materials,
- Oberflächenfasern eines zweiten Materials,
- eine erste Beschichtung, die aus einem Compound gemäß einem der Ansprüche 9 bis 11 aufgebracht ist, die die Oberflächenfasern an die erste Trägerstruktur binden,
- optional eine zweite Trägerstruktur, wobei, wenn die zweite Trägerstruktur vorhanden ist, die Beschichtung zwischen der ersten und zweiten Trägerstruktur angeordnet ist, und
- optional eine zweite Beschichtung auf der Seite der zweiten Trägerstruktur, die der ersten Beschichtung gegenüber liegt, wobei das erste und das zweite Material dieselbe oder unterschiedliche Hydrophilie aufweisen und die zweite Beschichtung aus einem Compound gemäß einem der Ansprüche 9 bis 11 oder einem davon unterschiedlichen Compound aufgebracht ist.

## Revendications

1. Composition de latex polymère comprenant :
(I) un polymère de latex contenant des motifs structurels dérivés de
a) 30 à 69 % en poids d'au moins un monomère de diène conjugué ;
b) 30 à 69 % en poids d'au moins un monomère de vinyle aromatique ;
c) 1 à 2,5 % en poids d'au moins un monomère choisi parmi
i) des monomères éthyléniquement insaturés ayant un groupe amide primaire,
ii) des monomères éthyléniquement insaturés ayant un groupe amide substitué par N-alkyle en C₁ à C₂,
iii) des monomères éthyléniquement insaturés ayant un groupe hydroxyalkyle, et
iv) des acides éthyléniquement insaturés ayant un pkₐ de 1,7 au maximum à condition que si un acide éthyléniquement insaturé ayant un pkₐ de 1,7 au maximum est présent, la quantité soit inférieure à 1,5 % en poids ; et
d) 0 à 0,8 % en poids d'un acide éthyléniquement insaturé ayant un pkₐ de plus de 1,8,
(II) de l'eau ; et
(III) un tensioactif dans une quantité inférieure à 1 % en poids, dans laquelle
tous les pourcentages en poids sont basés sur le poids total des monomères dans le polymère de latex.

2. Composition de latex polymère selon la revendication 1, dans laquelle le monomère de diène conjugué est choisi parmi le 1,3-butadiène, le 2-chloro-1,3-butadiène, l'isoprène, les pentadiènes et hexadiènes conjugués à chaîne droite et ramifiés ; et leurs combinaisons, de préférence le monomère de diène conjugué est le 1,3-butadiène.

3. Composition de latex polymère selon l'une quelconque des revendications précédentes, dans laquelle le monomère de vinyle aromatique est choisi parmi le styrène, l'alpha-méthyl styrène, le 4-méthyl styrène, l'alpha-chloro styrène, le 4-chloro styrène, le divinylbenzène, le 4-méthoxy-3-méthylstyrène, le 4-méthoxy-3-méthylstyrène, le 3,4-diméthyl-alpha-méthylstyrène et leurs combinaisons.

4. Composition de latex polymère selon l'une quelconque des revendications précédentes, dans laquelle :
- le monomère éthyléniquement insaturé ayant un groupe amide primaire est choisi parmi le (méth)acrylamide, l'éthacrylamide, le crotoneamide, le diacétoneamide et leurs combinaisons, de préférence, le monomère éthyléniquement insaturé ayant un groupe amide primaire est l'acrylamide ;
- le monomère éthyléniquement insaturé ayant un groupe amide substitué par N-alkyle en C₁ à C₂ est choisi parmi le N-méthyl(méth)acrylamide et le N-éthyl(méth)acrylamide ;
- le monomère éthyléniquement insaturé ayant un groupe hydroxyalkyle est choisi parmi l'acrylate de 2-hydroxyéthyle et le méthacrylate de 2-hydroxyéthyle ;
- l'acide éthyléniquement insaturé ayant un pkₐ de 1,7 au maximum est choisi parmi l'acide styrènesulfonique, l'acide vinylsulfonique, l'acide allylsulfonique, l'acide méthallylsulfonique, le 3-sulfopropylester d'acide (méth)acrylique, l'acide 2-acrylamido-2-méthylpropanesulfonique, de préférence l'acide éthyléniquement insaturé ayant un pkₐ de 1,7 au maximum est l'acide 2-acrylamido-2-méthylpropane sulfonique ; ou
- l'acide éthyléniquement insaturé ayant un pkₐ inférieur ou égal à 1,8 est choisi parmi l'acide (méth)acrylique, l'acide crotonique, et les acides dicarboxyliques éthyléniquement insaturés choisis parmi l'acide fumarique, l'acide maléique, l'acide itaconique, l'acide messaconique, l'acide citraconique et leurs monoesters et amides.

5. Composition de latex polymère selon l'une quelconque des revendications précédentes, dans laquelle le polymère de latex contient des motifs structurels dérivés de monomères c) (i) à c) (iii) dans une quantité de 1,2 à 2,3, ou 1,5 à 2,0 % en poids, sur la base du poids total des monomères dans le polymère de latex.

6. Composition de latex polymère selon l'une quelconque des revendications précédentes, dans laquelle la quantité des motifs structurels dérivés des acides éthyléniquement insaturés ayant un pkₐ inférieur ou égal à 1,8 est inférieure à 0,5, ou inférieure à 0,3 ou inférieure à 0,1 % en poids sur la base du poids total de monomères dans le polymère de latex, de préférence le polymère de latex ne contient aucun motif structurel dérivé des acides éthyléniquement insaturés ayant un pkₐ inférieur ou égal à 1,8.

7. Composition de latex polymère selon l'une quelconque des revendications précédentes, dans laquelle la quantité du tensioactif est de 0,8 % en poids maximum, ou de 0,6 % en poids maximum, ou de 0,5 % en poids maximum, sur la base du poids total de monomères dans le polymère de latex.

8. Composition de latex polymère selon l'une quelconque des revendications précédentes, dans laquelle la taille de particule moyenne du polymère de latex est de 80 à 220 nm ou 100 à 200 nm mesurée par fractionnement hydrodynamique.

9. Composé convenant à la préparation de renforts pour des revêtements de sol en textile comprenant :
a) la composition de latex polymère selon l'une quelconque des revendications 1 à 8 ;
b) au moins une charge ; et
c) facultativement des particules de caoutchouc.

10. Composé selon la revendication 9, dans lequel
(a) une ou plusieurs charges sont présentes dans une quantité de 50 à 500 % en poids, ou 100 à 350 % en poids ou 150 à 300 % en poids, sur la base du poids des solides totaux de la composition de latex polymère et aucune particule de caoutchouc n'est présente ; ou
(b) une ou plusieurs charges sont présentes dans des quantités de 30 à 150 % en poids ou 40 à 100 % en poids ; et
des particules de caoutchouc sont présentes dans des quantités de 80 à 200 % en poids ou 100 à 150 % en poids,
tous les pourcentages en poids étant basés sur le poids des solides totaux de la composition de latex polymère.

11. Composé selon la revendication 10(a), dans lequel le composé a une tension de surface d'au moins 50 mN/m mesurée selon la norme ISO 1409 à 23 °C.

12. Utilisation d'une composition de latex polymère selon l'une quelconque des revendications 1 à 8 ou du composé selon l'une quelconque des revendications 9 à 11, dans la préparation de revêtements de sol en textile.

13. Revêtement de sol en textile comprenant une couche ou un élément structurel fait d'un composé selon l'une quelconque des revendications 9 à 11.

14. Revêtement selon la revendication 13, étant choisi parmi les tapis et le gazon artificiel.

15. Revêtement selon l'une quelconque des revendications 13 ou 14, comprenant :
- une première structure de support comprenant une étoffe tissée ou non tissée d'un premier matériau ;
- des fibres faciales d'un second matériau ;
- une première couche déposée à partir d'un composé selon l'une quelconque des revendications 9 à 11 fixant les fibres faciales à la première structure de support ;
- facultativement une seconde structure de support, moyennant quoi si la seconde structure de support est présente, la couche est positionnée entre la première et la seconde structure de support ; et
- facultativement un second revêtement sur le côté de la seconde structure de support opposée à la première couche dans lequel
le premier et le second matériau ont une hydrophilie identique ou différente et la seconde couche est déposée à partir d'un composé selon l'une quelconque des revendications 9 à 11 ou d'un composé différent.
